# EUROPÄISCHE PATENTSCHRIFT

(11) **EP 1 651 883 B1**
(45) Veröffentlichungstag und Bekanntmachung des Hinweises auf die Patenterteilung: **11.03.2009**
(21) Anmeldenummer: 04741352.1
(22) Anmeldetag: 02.08.2004
(51) Int. Cl.: F16D 67/00, F16D 65/14, F16D 55/28

(54) **Antriebs-Abtriebs-Aggregat mit Kupplungsbremskombination**
Drive-Driven-Unit with coupling/brake combination
Dispositif mené/menant avec combinaison accouplement/frein

(30) Priorität: 04.08.2003 DE 10335639
(43) Veröffentlichungstag der Anmeldung: 03.05.2006
(73) Patentinhaber: Chr. Mayr GmbH & Co. KG, 87665 Mauerstetten (DE)
(72) Erfinder: VOGT, Herbert, 87665 Mauerstetten (DE); EBERLE, Johann, 87660 Irsee (DE); BRAUN, Ludwig, 86857 Hurlach (DE)
(74) Vertreter: Ruschke, Hans Edvard
(86) Internationale Anmeldenummer: PCT/EP2004/008654
(87) Internationale Veröffentlichungsnummer: WO 2005/017384

(56) Entgegenhaltungen:
- WO-A-02/084841
- DE-A- 19 614 945
- FR-A- 1 399 381
- FR-A- 1 431 052
- US-A- 3 338 349
- US-B1- 6 413 164

## Beschreibung

Die vorliegende Erfindung geht aus von einem Stand der Technik, wie er in der DE 20105 746.8 oder der WO 02/084841 der Anmelderin gegeben ist.

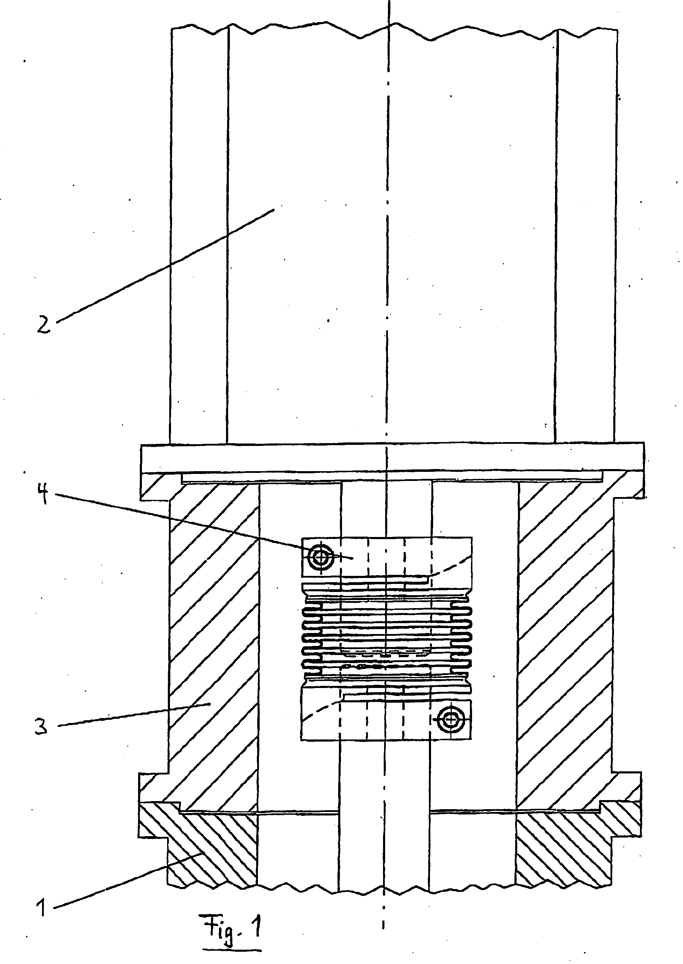

Bei dieser bekannten Ausführung wird zwischen der Motorwelle und der Getriebewelle bzw. der anzutreibenden Spindel meistens eine elastische Kupplung wie beispielsweise eine Balgkupplung oder eine Steckkupplung mit elastischem Stern eingesetzt und das Ganze durch ein Verbindungsstück (in Gestalt einer so genannten "Laterne") gegen die Umgebung abgeschirmt - man vergleiche in etwa die Fig. 1.

Beim vorgenannten Stand der Technik wurde davon ausgegangen, dass die Bremse auf einem Servomotor aufgebaut wird und auf der Motorseite wirksam ist. Die zweite Welle, welche über die Balgkupplung verbunden wird, kann ein Getriebe, eine Spindel, eine Kugekollspindel oder dgl. sein. Ein Nachteil dieser Anordnung besteht darin, dass sie relativ lang baut. Es kommt hinzu, dass wenn diese Kupplungsbremskombination in eine Vertikalachse (wie in Fig. 1) eingebaut wird, mehrere zusätzliche Probleme beachtet werden müssen.

Falls die Kupplung z.B. durch äußere Einwirkungen zu Bruch geht, kann es zu einem "Absturz" der nachgeordneten Maschinenteile und somit zu erheblichen Schäden kommen.

Das gleiche Problem des eventuellen Absturzes der nachgeordneten Maschinenteile stellt sich auch, wenn der Antriebsmotor defekt ist und zwecks Reparatur oder Austausches ausgebaut werden soll.

In vielen konkreten Einbausituationen ist es im übrigen besonders wünschenswert, eine in Axialrichtung besonders kurz bauende Kupplungsbremskombination einsetzen zu können.

Hiernach ist es die der vorliegenden Erfindung zugrunde liegende Aufgabe, die oben genannten Probleme in einer möglichst effizienten Weise zu beseitigen.

Diese Aufgabe wird in erfindungsgemäßer Weise dadurch gelöst, dass das Spulenträgergehäuse der Bremse mit der Magnetspule so ausgebildet wird, dass es in etwa der vorgenannten Laterne (=Verbindungsstück) entspricht, also deren äußeren Abmessungen. Der Bremsrotor mit den beiden Reibbelägen und mit seiner Verzahnung wird direkt auf der Nabe angeordnet, die mit der Balgkupplung und deren Klemmung oder einer sonstigen elastischen Kupplung verbunden ist. Dies bedeutet, dass die Bremse auf der Abtriebsseite angeordnet ist und somit auch dann für die nachgeordneten Maschinenteile wirksam bleibt, wenn die Kupplung versagt oder der Antriebsmotor z.B. für Reparaturzwecke oder dgl. ausgebaut wird.

Aufgrund der erfindungsgemäßen Lösung ergeben sich hiernach folgende Vorteile:
1) Nachdem die Bremse mit ihrer Umfangsverzahnung auf der Getriebe- oder Spindelwelle direkt angebaut ist, sind keine weiteren Kupplungsteile zwischen Motor und Getriebe vorhanden, welche bei einem eventuell auftretenden Bruch der Kupplung die Bremse sonst unwirksam werden lassen.
2) Sollte der Motor ausgewechselt werden müssen, kann dies ohne Probleme geschehen, da die Bremse auf der Abtriebsseite direkt angebaut ist und somit die Bremswirkung erhalten bleibt. Die Motorwelle kann somit aus der Kupplung herausgezogen werden und die Bremswirkung ist trotzdem vorhanden.
3) Durch die Ausgestaltung der Kupplungsbremskombination nach Art der vorgenannten Laterne wird erreicht, dass die beiden Wellenspiegel (Motorwelle, Getriebe- bzw. Spindelwelle) so nahe wie möglich beieinander liegen und somit kein Bauraum verschwendet wird.
4) Die herkömmliche Laterne (=Verbindungsstück) mit der darin enthaltenen Balgkupplung oder Steckkupplung mit elastischem Stern entfällt und stattdessen wird eine komplette Bremse mit einem entsprechenden Gehäuse eingesetzt, die in ihrem Zentrum zur Aufnahme einer elastischen Kupplung, z.B. einer Balgkupplung oder einer Steckkupplung mit elastischem Stern ausgebildet und eingerichtet ist. Somit entsteht eine optimale Raumausnutzung und eine einfache kompakte Konstruktion.

Die vorliegende Erfindung wird anhand der beiliegenden Figuren näher erläutert. Darin zeigt:
Fig.1 eine prinzipielle Darstellung einer typischen herkömmlichen Einbausituation nach dem Stand der Technik in Gestalt einer "Laterne" (= Verbindungsstück 3) in einem vertikalen Antriebsstrang zwischen einem Antriebsmotor 2 und, beispielsweise, einem Getriebe 1; Eine solche Einbausituation wird durch die vorliegende Erfindung entscheidend verbessert, wobei die Verbindung von Antriebsmotor 2 und Getriebe 1 über eine Kupplung, wie z. B. eine Balgkupplung oder eine Steckkupplung mit elastischem Stern (Darstellung in Fig. 7 und8) erfolgt;
Fig. 2 eine vollständige Darstellung einer ersten Ausführungsform der Erfindung (Schnitt längs Linie A-A in Fig. 4);
Fig. 3 eine Schnittansicht ähnlich der Fig. 2, jedoch längs Linie B-B in Fig. 4;
Fig. 4 eine Ansicht der Fig. 2 und 3 von rechts;
Fig. 5 eine weitere vorzugsweise Ausgestaltung der ersten Ausführungsform der erfindungsgemäßen Kupplungsbremskombination;
Fig. 6 eine weitere Ausführungsform der erfindungsgemäßen Kupplungsbremskombination, ähnlich Fig. 2 und 3, jedoch mit Steckkupplung mit elastischem Stern und Klemmkasten sowie mit Lüftüberwachung;
Fig. 7 eine Explosionszeichnung der Fig. 6 zur besseren Darstellung der elastischen Kupplung als Steckkupplung mit elastischem Stern;
Fig. 8 eine weitere Ausführungsform der erfindungsgemäßen Kupplungsbremskombination, mit einer integrierten Überlastkupplung, welche mit der elastischen Steckkupplung verbunden ist;
Fig. 9 ein Anwendungsbeispiel, d.h. den Anbau einer Kupplungsbremskombination an ein Gehäuse mit Spindel und einem Anbaumotor.

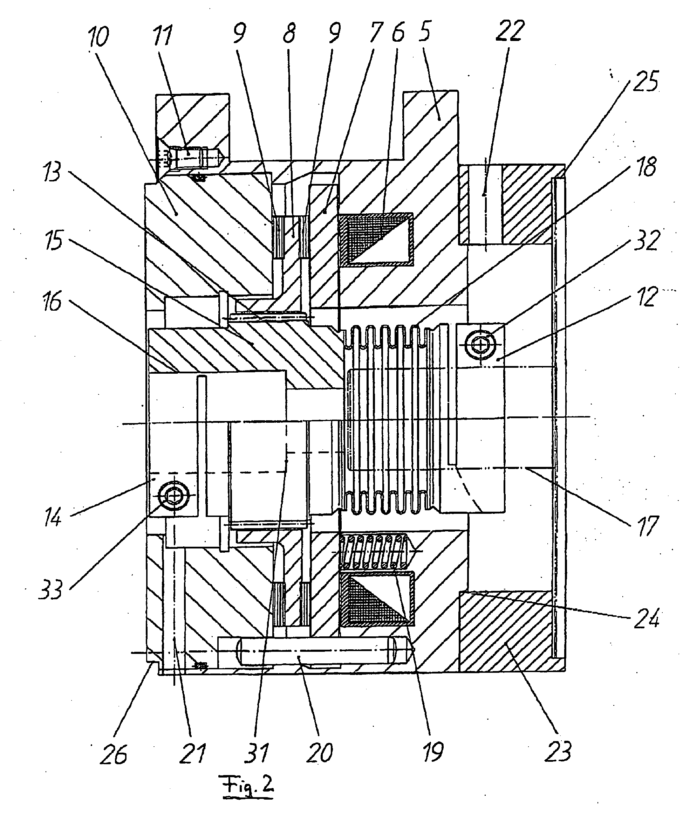

Die Fig. 2 zeigt ein bevorzugtes Ausführungsbeispiel der erfindungsgemäßen Kupplungsbremskombination, deren wesentlicher Aspekt darin zu sehen ist, dass eine iuhestrombetätigte Reibungsbremse in das Verbindungsstück 3 der Fig.1 integriert ist und der zugehörige Bremsrotor 8 im Inneren des Verbindungsstückes auf der Verzahnung 13 auf der zentralen Nabe 15 der Hohlwelle 16 der Abtriebsseite sitzt, wobei die Hohlwelle über einen Klemmring 14 mit einer Klemmschraube 33 mit dem nicht näher dargestellten Wellenstumpf der Abtriebsseite verbindbar ist.

Die Hohlwelle 16 der Abtriebsseite weist zur Antriebsseite hin eine axiale Verlängerung in Gestalt einer flexiblen Kupplung auf, die konkret die Form einer angeschweißten Balgkupplung 18 mit einem endständigen Klemmring 12 auf der Antriebsseite aufweist, wobei letzterer mit einer Klemmschraube 32 betätigbar ist.

Das in Fig. 2 die Hohlwelle 16 der Abtriebsseite und die Balgkupplung 18 der Antriebsseite vollständig einschließende äußere Gehäuse, welches dem Verbindungsstück 3 bzw. der Laterne der Fig.1 entspricht, ist zugleich auch als Spulenträgergehäuse 5 für die Magnetspule 6 ausgebildet, die in bekannter Weise mit der axial verschieblichen aber undrehbaren Ankerscheibe 7 zusammenwirkt und letztere im bestromten Zustand entgegen der Kraft der Druckfedern 19 anzieht. Im stromlosen Zustand drückt die Ankerscheibe 7 aufgrund der Druckfedern 19 gegen den beidseitig mit Reibbelägen 9 versehenen Bremsrotor 8, der über die Verzahnung 13 mit der Hohlwelle 16 drehstarr aber axial verschieblich verbunden ist. Im gebremsten Zustand liegt der Rotor mit seinen Reibbelägen 9 einerseits an der Ankerscheibe 7, andererseits am Bremsflansch 10 an, der anstatt der "Laterne" (= Verbindungsstück) vorhanden ist.

Den in Figur 2 rechtsseitigen Abschluß (anstatt der "Laterne") bildet ein konzentrisch aufgesetzter Verstellring 23, der eine Zentrierung 25 für den nicht näher dargestellten Antriebsmotor 2 aufweist. Der Verstellring weist eine radiale Bohrung 22 auf, die es ermöglicht, ein Werkzeug zum Lösen bzw. Festziehen der Klemmschraube 32 von außen in das Aggregat einzuführen. Die Verstellbarkeit des Ringes 23 in Umfangsrichtung gewährleistet, dass ein Zugriff auf die Schraube 32 immer möglich ist, unabhängig von der rein zufälligen Ruheposition des Klemmringes 12 im Stillstand des Aggregates.

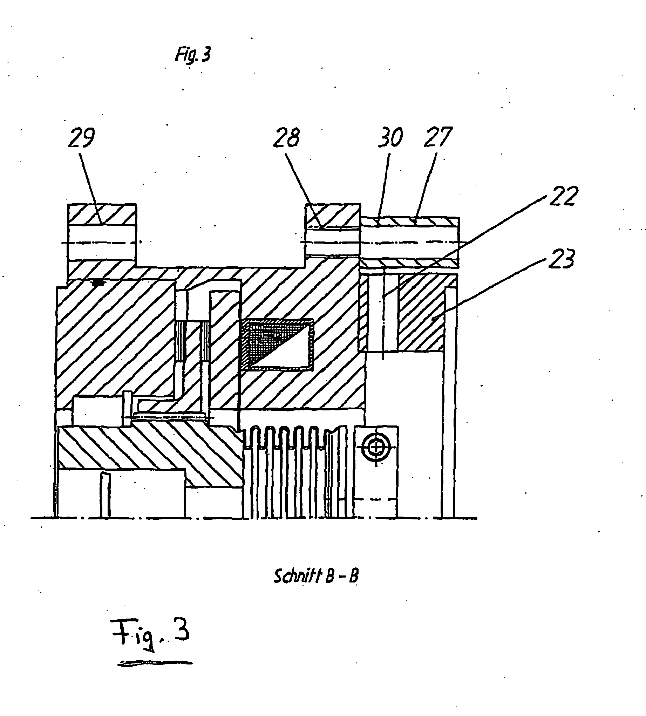

In Fig. 3 wird die Anschraubung über die Distanzhülsen 27 mit Bohrung 30 an das Gewinde 28 im Spulenträger 5 gezeigt. Der Verstellring 23 ist etwas kürzer als die Distanzhülse 27, so daß im angebauten Zustand der Verstellring 23 verdreht werden kann, um die Bohrung 22 im Verstellring 23 in jede beliebige Position bringen zu können, um an die Klemmschraube 32 an der Motorseite des Klemmringes 12 auf der Motorseite hinzukommen.

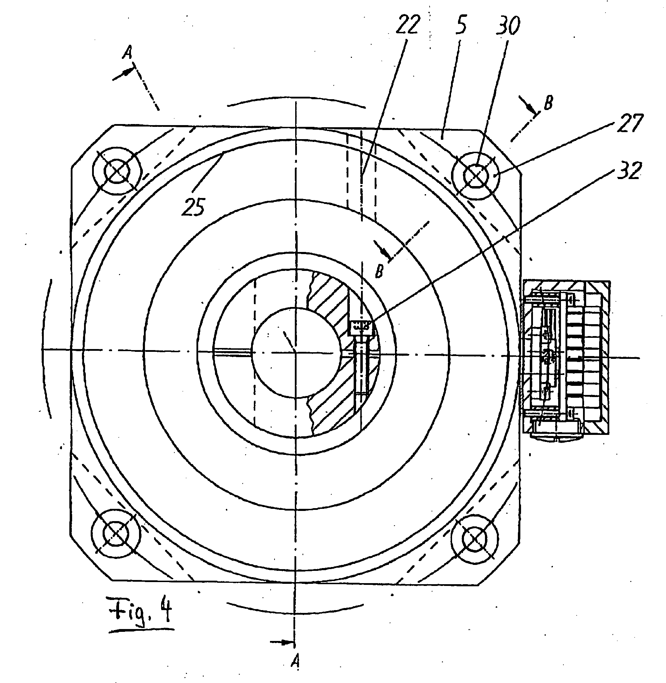

In Figur 4 wird in der Seitenansicht die Bohrung 22 im Verstellring 23 strichliert angedeutet, durch welche man an die Klemmschraube 32 hinkommt.

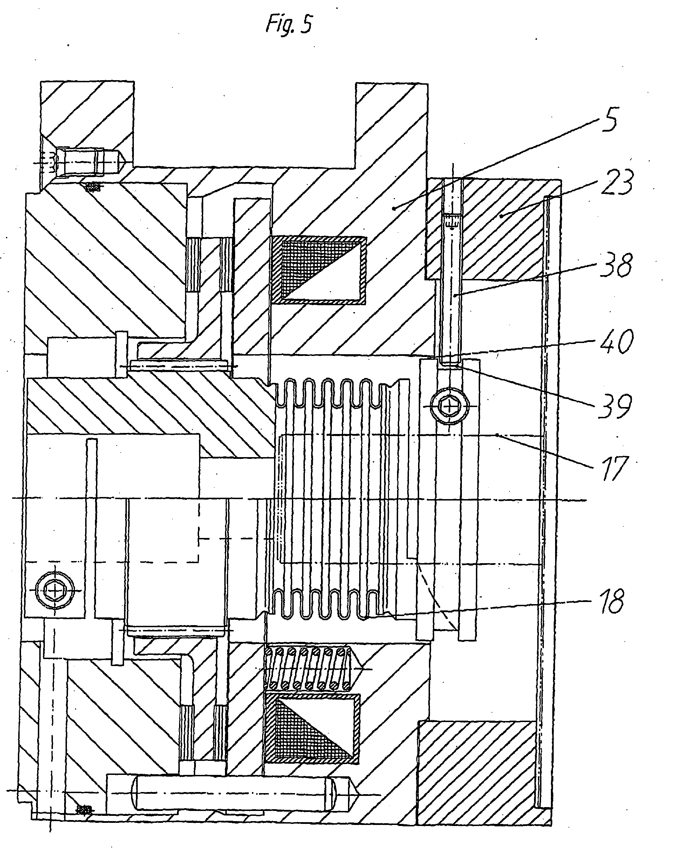

Die in Figur 5 gezeigten, auf dem Umfang des Verstellringes 23 gleichmäßig verteilten drei oder mehr Gewindestifte 38 dienen dazu, dass bei Verkantung oder exzentrischem Einführen der Motorwelle 17 in die Balgkupplung 18 der Balg nicht verdrückt und beschädigt wird. Nachdem die Gewindestifte 38 in die Ringnut 39 der Balgkupplung 18 hinein ragen, kann der Balg weder beim Einschieben noch beim Herausziehen der Welle 17 zusammengedrückt bzw. überdehnt werden. Der Spalt 40 zwischen dem Spulenträgergehäuse 5 und der Balgkupplung 18 dient zusätzlich zur radialen Begrenzung der Verlagerungsmöglichkeit , um auch hier keinen unnötigen, übermäßigen Radialversatz zu bekommen, welcher bei der Kupplung bleibende Schäden hinterlassen könnte. Ein weiterer Vorteil ist dadurch auch für den Transport der gesamten Kupplungs-Brems-Kombination gegeben.

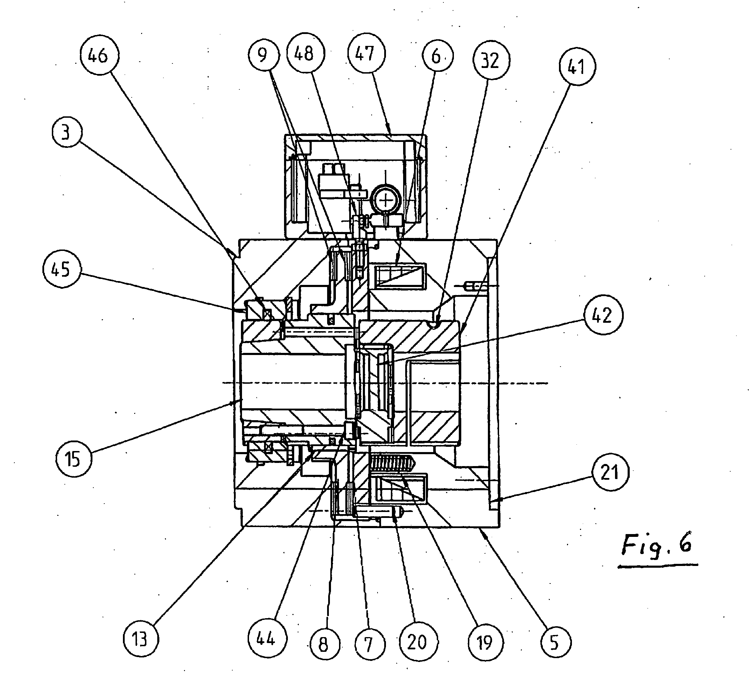

In Figur 6 wird eine Alternativform mit der Steckkupplung 41 mit elastischem Stern 42 gezeigt. Die Klemmung erfolgt ebenfalls mit einer Klemmschraube 32. Auf der Abtriebsseite 2 wird die Klemmung der Nabe 15 über einen Spannring 43 vorgenommen, welcher über Spannschrauben 44 angezogen wird. In einem Abdichtungsflansch 45 befindet sich ein Dichtring 46, welcher die Reibbeläge 9 vor Schmutz und Öl schützt.

Im Anschlußkasten 47 befindet sich eine Lüftüberwachung 48 (Mikroschalter), welcher den Zustand der Bremse (frei oder gebremst) anzeigt.

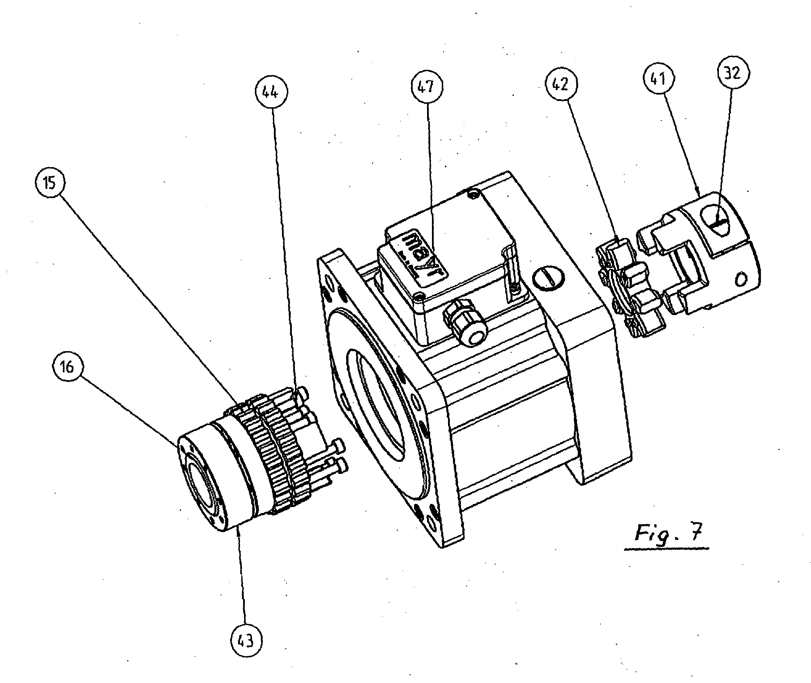

In Figur 7 wird nochmals in übersichtlicher Form die Ausführungsform mit der Steckkupplung 41 mit elastischem Stern 42 in Explosionsdarstellung gezeigt. Mit den Spannschrauben 44 wird der Spannring 43 angezogen und somit die Abtriebswelle (z. B. Getriebe, Spindel oder ähnliches) mit der Kupplung verbunden.

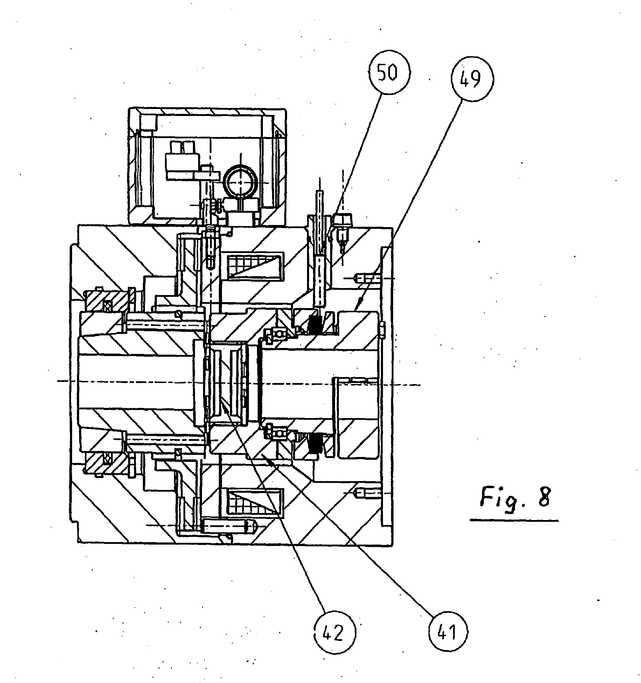

Figur 8 zeigt eine Ausführungsform, bei welcher die Steckkupplung 41 mit einer Überlastkupplung .49 verbunden ist, welche bei Überlastung ausrastet und eine Axialbewegung ausführt. Diese Axialbewegung wird mit einem Initiator 50 aufgenommen, und der Antriebsmotor wird abgeschaltet. Somit wird der ganze Antrieb vor Überlast geschützt.

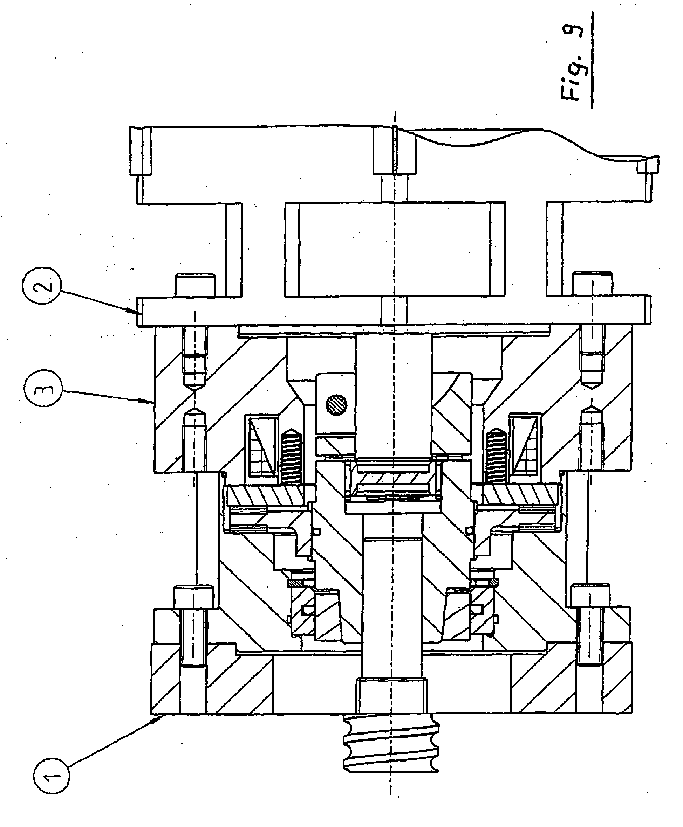

In Figur 9 wird der Anbau dargestellt, bei welchem der Antriebsmotor 2 mit seinem Wellenstumpf und Zentrierung an die Kupplungsbremskombination angebaut wird. Die Kupplungsbremskombination wird dann weiter an ein Gehäuse mit Spindel oder Getriebe angebaut. Das Verbindungsstück 3 nach dem Stand der Technik in Figur 1 entfällt und die erfindungsgemäße Kupplungsbremskombination kommt im Austausch dazwischen. Ein wesentlicher Vorteil liegt darin, daß mit dieser Konstruktion vorhandene Maschinen einflach durch den Wegfall der herkömmlichen "Laterne" 3 und der Kupplung 4 und durch den Austausch mit einer Kupplungsbremskombination, ohne Anapassungsarbeiten, baugleich ausgetauscht werden können. Dies bedeutet keine zusätzlichen Kosten und gewährleistet die zusätzliche Sicherheit durch eine ruhestrombetätigte Bremse.

### Funktion:

Die Bremse arbeitet nach dem bekannten Ruhestromprinzip. Es wird eine Spannung auf die Magnetspule 6 gegeben, welche sich im Spulenträgergehäuse 5 befindet. Dadurch wird die Ankerscheibe 7 axial gegen den Druck der Druckfedern 19 angezogen, wobei die Drehmomentübertragung über die Bolzen 20 erfolgt. Somit kann der Rotor 8 mit den beiden Reibbelägen 9 über die Verzahnung 13 auf der Nabe 15 folgen. Diese kann frei umdrehen. Wird der Strom weggenommen, fällt die Ankerscheibe über den Federdruck 19 gegen die beiden Reibbeläge 9 ein und die Nabe 15 wird abgebremst.

### Antrieb:

Die Motorwelle 17, welche von rechts in Fig. 2 in die Balgkupplung 18 eingeschoben wird, kann über den Klemmring 12 und die Schraube 32 geklemmt werden. Somit erfolgt die Drehmomentübertragung von der Motorwelle 17 auf die Balgkupplung 18 oder die Steckkupplung 41 mit elastischem Stern 42, welche mit der Nabe 15 verbunden ist. Durch den Klemmring 14 kann ein beliebiger anzutreibender Wellenstumpf, wie z.B. ein Getriebewellenstumpf oder ein Spindelwellenstumpf in die Hohlwelle 16 eingeschoben werden. Im Inneren der Hohlwelle 16 ist vorzugsweise ein Anschlag 31 ausgebildet, damit die Welle nicht zu weit eingeschoben wird. Mit dem Klemmring 14 und der Schraube 33 wird dann die sogenannte Abtriebswelle (Getriebe oder Spindelwelle) geklemmt und es erfolgt die gewünschte Drehmomentübertragung von der Antriebsseite zu der Abtriebsseite.

Bei der Montage wird zuerst die Getriebewelle geklemmt, was über die Bohrung 21 mit einem Innensechskantschlüssel auf die Schraube 33 erfolgen kann. Über die Außenzentrierung 26 wird die Kupplungs-Brems-Kombination am Getriebe oder einem Gehäuse angebaut und über die Bohrung 29 an vier Stellen befestigt. Die Verbindungsschraube 11 dient nur dazu, das Gehäuse 5 an dem Bremsflansch 10 zu fixieren.

### Motoranbau:

Die Motorwelle 17 wird in die Balgkupplung hinein geschoben und anschließend wird über die Bohrung 22 der Klemmring 12 mit der Innensechskantschraube 32 auf der Motorwelle geklemmt. Der Motor wird über die Zentrierung 25 auf dem Verstellring 23 fixiert und über vier Abstandsbuchsen 27 mit einer Bohrung 30 mit Schrauben am Gewinde 28 befestigt.

### Vorteilhafte Ausgestaltung:

Der Verstellring 23 dient dazu, dass bei einem Motorausfall dieser Ring in eine beliebige Drehstellung gedreht werden kann, so dass die Bohrung 22 über der Schraube 32 des Klemmringes 12 steht, um dann die Motorwelle 17 in jeder beliebigen Lage lösen zu können und sie axial aus der Kupplung herausziehen zu können. Mit dieser Ausgestaltung wird eine komplett geschlossene Kupplungs-Brems-Kombination geschaffen, bei der trotzdem in jeder beliebigen Lage der Motor an- bzw. abgebaut werden kann. Dies ist wichtig bei Motordefekten, weil dann der Motor nicht mehr funktioniert und nicht mehr in eine bestimmte "Demontage-Position" gedreht werden kann.

Bei der Ausführung gemäß Fig. 6 und 7 besteht der Vorteil einer Steckkupplung gegenüber einer Balgkupplung, daß der Zwischenring 23, welcher verstellbar ist, entfallen kann und die Kupplungsbremskombination komplett an das Gehäuse angebaut werden kann und erst anschließend der Motor mit der Steckkupplung 41 und dem elastischen Stern 42 in die Kupplungsbremskombination eingeführt wird und der Motor anschließend an der Kupplungsbremskombination befestigt wird. Eine Demontage ist in jeder beliebigen Lage des Motors möglich, da die Steckkupplung steckbar ist und der Motor mit der Kupplung 41 und 42 herausgezogen werden kann.

### Bezugszeichenliste:

- 1: Getriebe/Spindel o.ä. (= Abtrieb)
- 2: Motor
- 3: Laterne zwischen Motor und Getriebe (= Verbindungsstück)
- 4: Kupplung
- 5: Spulenträgergehäuse
- 6: Magnetspule
- 7: Ankerscheibe
- 8: Rotor
- 9: Reibbeläge
- 10: Bremsflansch
- 11: Verbindungsschraube
- 12: Klemmring Motorseite
- 13: Verzahnung
- 14: Klemmring Getriebeseite
- 15: Nabe (mit Verzahnung 13)
- 16: Hohlwelle Getriebeseite
- 17: Motorwelle
- 18: Balgkupplung
- 19: Federn (Schraubenfedern)
- 20: Bolzen
- 21: Bohrung im Bremsflansch
- 22: Bohrung im Verstellring
- 23: Verstellring
- 24: Zentrierung Spulenträger (5)
- 25: Zentrierung Verstellring für Motor
- 26: Außenzentrierung Bremsflansch
- 27: Distanzhülsen
- 28: Gewinde im Spulenträger (5)
- 29: Durchgangsbohrung im Spulenträger (5)
- 30: Bohrung Distanzhülse
- 31: Anschlag Hohlwelle (16)
- 32: Klemmschraube Motorseite
- 33: Klemmschraube Getriebeseite
- 34: Wellenstumpf
- 35: Lagerung
- 36: Hohlwelle für Motorwelle
- 37: Klemmung für Motorwelle
- 38: Gewindestifte im Verstellring (23)
- 39: Rille im Klemmring (12)
- 40: Zentrierung (radiale Begrenzung)
- 41: Steckkuppklung
- 42: Elastischer Stern
- 43: Spannring (konisch)
- 44: Spannschrauben
- 45: Abdichtungsflansch
- 46: Dichtring
- 47: Anschlußkasten
- 48: Lüftüberwachung (Mikroschalter).
- 49: Überlastkupplung
- 50: Initiator (Sensor)

## Patentansprüche

1. Antriebs-Abtriebs-Aggregat mit Kupplungsbremskombination,
bei dem das Aggregat als Verbindungsstück (3) zwischen Motor (2) und Abtrieb (1) mit integrierter ruhestrombetätigter Federdruckbremse und mit einer zentralen Nabe (15) zwischen Motor (2) und Abtrieb (1) ausgebildet ist,
wobei die Federdruckbremse auf dem Abtrieb (1) angeordnet und das Aggregat so ausgebildet ist, dass die beiden Wellenspiegel vom Motor (2) und Abtrieb (1) in der zentralen Nabe (15) unmittelbar aneinander liegen, damit die kürzest mögliche Baulänge des kompletten Aggregats erreicht wird,
wobei der Bremsrotor (8) der Federdruckbremse im Inneren des Verbindungsstückes (3) auf der Verzahnung (13) der zentralen Nabe (15) der Hohlwelle (16) des Antriebs (1) sitzt,
und wobei zur Drehmomentübertragung vom Motor (2) auf die Nabe (15) eine elastische Kupplung vorgesehen ist, die im Durchmesser so klein ist, dass sie radial ins Zentrum der Bremse passt und die beiden Wellenspiegel so nah wie möglich aneinander liegen.

2. Aggregat nach Anspruch 1, **dadurch gekennzeichnet, dass** die elastische Kupplung als Balgkupplung (18) mit Klemmring (12) ausgebildet ist.

3. Aggregat nach Anspruch 2, **dadurch gekennzeichnet, dass** ein in seiner Drehwinkelstellung einstellbarer Verstellring (23) vorgesehen ist, damit in jeder beliebigen Drehstellung des Klemmringes (12) der Abtriebsseite die Möglichkeit besteht, über die radiale Bohrung (22) die Klemmschraube (32) zu lösen, um bei einem Defekt einen neuen Motor einzubauen.

4. Aggregat nach Anspruch 2 oder 3, **dadurch gekennzeichnet, dass** der Klemmring (12) mit einer Rille (Nut 39) ausgebildet ist, in welche mehrere auf dem Umfang verteilte Gewindestifte (38) hineinragen, die den Balg für die Demontage und Montage der Motorwelle (17) axial festlegen, damit er bei der Montage nicht zerdrückt und überdehnt wird.

5. Aggregat nach einem der Ansprüche 2 bis 4, **dadurch gekennzeichnet, dass** zusätzlich ein Spalt (40) zwischen Spulenträgergehäuse (5) und Klemmring (12) vorhanden ist derart, dass der Spalt (40) eine angemessene radiale Fixierung der Balgkupplung bewirkt, der somit gegen zu starke radiale Verlagerungen gesichert ist.

6. Aggregat nach Anspruch 1, **dadurch gekennzeichnet, dass** die elastische Kupplung der Nabe (15) als eine Steckkupplung (41) mit elastischem Stern (42) ausgebildet ist.

7. Aggregat nach Anspruch 6, **dadurch gekennzeichnet, dass** die Nabe (15) mit einem Spannring (43) ausgebildet ist.

8. Aggregat nach einem der Ansprüche 6 oder 7, **dadurch gekennzeichnet, dass** im Bremsflansch (10) ein Abdichtungsflansch (45) eingesetzt wird, welcher einen Dichtring beinhaltet und zum Spannring (43) eine Abdichtung bildet, um die Reibbeläge (9) vor Schmutz und Öl zu schützen.

9. Aggregat nach einem der Ansprüche 1 bis 8, **dadurch gekennzeichnet, dass** an die elastische Kupplung in Gestalt einer Balgkupplung oder Steckkupplung mit elastischem Stern eine Überlastkupplung (49) angebaut wird, welche über einen Initiator/Sensor (50) bei Überlastung den Antrieb abschaltet.

10. Aggregat nach einen der Ansprüche 1 bis 9, **dadurch gekennzeichnet, dass** für ein redundantes Bremssystem eine zweite Bremse mit Magnetspule, Ankerscheibe und Rotor in die Kupplungsbremskombination eingefügt wird.

11. Aggregat nach einem der Ansprüche 1 bis 10, **dadurch gekennzeichnet, dass** an die Kupplungsbremskombination ein Anschlusskasten (47) angebracht wird, in welchem sich eine Lüftüberwachung (48) mittels eines Mikroschalters befindet, welche durch die Bewegung der Ankerscheibe (7) den Mikroschalter (48) betätigt und ein Signal gibt, ob die Bremse frei oder gebremst ist.

## Claims

1. Drive input/output unit including a coupling-brake combination, said unit being designed to form a connecting member (3) between motor (2) and output member (1) and comprising an integrated quiescent-current operated spring pressure brake and a central hub (15) disposed between motor (2) and output member (1),
said spring pressure brake being mounted on output member (1) and the unit being designed so that the shaft end faces of motor (2) and output member (1) are contiguous in central hub (15) to so obtain the shortest possible design length of the overall unit,
with brake rotor (8) of said spring pressure brake being mounted within connecting member (3) on splines (13) of central hub (15) of the hollow shaft (16) of output member (1), and
with an elastic coupling being provided for torque transfer from motor (2) to hub (15), said coupling having a diameter small enough to radially fit in the center of the brake and to place the shaft end faces as near to each other as possible.

2. Unit as in claim 1, **characterized in that** said elastic coupling is formed to be a bellows coupling (18) including a clamp ring (12).

3. Unit as in claim 2, **characterized by** an adjustment ring (23) adjustable in angular position being provided to create the possibility of releasing clamp screw (32) through radial bore (22) for replacing a defective motor in any rotational position of output-side clamp ring (12).

4. Unit as in claim 2 or 3, **characterized by** clamp ring (12) having therein a recess (groove 39) receiving a plurality of circumferentially distributed threaded pegs (38), said pegs axially fixing the bellows in place for the assembly and disassembly of the motor shaft (17) so as to keep the bellows from being squeezed and overstretched during assembly.

5. Unit as in any of claims 2 to 4, **characterized by** a gap (40) additionally provided between coil carrier housing (5) and clamp ring (12), said gap ensuring an adequate radial fixing of said bellows coupling against excessive radial displacement.

6. Unit as in claim 1, **characterized by** elastic coupling of hub (15) being designed to form a plug-in coupling (41) comprising an elastic star member (42).

7. Unit as in claim 6, **characterized by** hub (15) being designed to comprise a tensioning ring (43).

8. Unit as in any of claims 6 or 7, **characterized by** brake flange (10) being designed to receive a sealing flange (45) having therein a sealing ring to seal against tensioning ring (43) so as to protect friction liners (9) from dirt and oil.

9. Unit as in any of claims 1 to 8, **characterized by** an overload coupling (49) being associated with the elastic coupling in the form of a bellows coupling or of a plug-in coupling, said overload coupling (49) being designed to deactivate the drive via an initiator/sensor (50) upon the occurrence of overload.

10. Unit as in any one of claims 1 to 9, **characterized by** providing a redundant brake system by incorporating in the coupling-brake combination a second brake comprising a magnetic coil, an armature disc and a rotor.

11. Unit as in any one of claims 1 to 10, **characterized by** said coupling-brake combination mounting a terminal box (47) housing a status monitoring device (48) comprising a micro-switch actuated by armature disc (7) to issue a signal indicating whether the brake is engaged or disengaged.

## Revendications

1. Dispositif mené/menant avec combinaison accouplement/frein, dans lequel,
le dispositif est réalisé sous forme de raccord (3) entre le moteur (2) et la sortie (1), avec frein sous pression de ressort intégré actionné en courant continu et avec un moyeu central (15) entre le moteur (2) et la sortie (1),
le frein sous pression de ressort est disposé sur la sortie (1) et le dispositif est réalisé de sorte que les deux plans symétriques d'arbres du moteur (2) et de la sortie (1) soient directement limitrophes dans le moyeu central (15), afin que la longueur de construction la plus courte possible de l'ensemble du dispositif soit obtenue,
le rotor de frein (8) du frein sous pression de ressort repose à l'intérieur du raccord (3) sur la denture (13) du moyeu central (15) de l'arbre creux (16) de la transmission (1), et
pour la transmission du couple du moteur (2) au moyeu (15), il est prévu un accouplement élastique d'un diamètre si petit qu'il s'adapte dans la direction radiale au centre du frein et que les deux plans symétriques d'arbres se situent le plus près possible l'un de l'autre.

2. Dispositif suivant la revendication 1, **caractérisé en ce que** l'accouplement élastique est réalisé sous forme d'accouplement à soufflet (18) avec bague de serrage (12).

3. Dispositif suivant la revendication 2, **caractérisé en ce qu'**il est prévu une bague d'ajustage (23) réglable dans sa position angulaire de rotation, afin qu'il soit possible, dans n'importe quelle position de rotation de la bague de serrage (12) du côté sortie, de desserrer la vis de serrage (32) par l'intermédiaire de l'alésage radial (22) pour incorporer un nouveau moteur en cas de défaut.

4. Dispositif suivant l'une des revendications 2 et 3, **caractérisé en ce que** la bague de serrage (12) est réalisée avec une rainure (gorge 39), dans laquelle pénètrent plusieurs tiges filetées (38) réparties sur le pourtour, lesquelles tiges fixent le soufflet dans la direction axiale pour le démontage et le montage de l'arbre (17) du moteur, afin qu'il ne soit pas écrasé et allongé excessivement lors du montage.

5. Dispositif suivant l'une des revendications 2 à 4, **caractérisé en ce qu'**il est prévu en supplément une fente (40) entre le carter (5) du porte-bobines et la bague de serrage (12), de telle sorte que la fente (40) provoque une fixation radiale appropriée de l'accouplement à soufflet, qui est ainsi bloqué contre des déplacements radiaux excessifs.

6. Dispositif suivant la revendication 1, **caractérisé en ce que** l'accouplement élastique du moyeu (15) est réalisé sous forme d'un accouplement à emboîtement (41) avec une étoile élastique (42).

7. Dispositif suivant la revendication 6, **caractérisé en ce que** le moyeu (15) est réalisé avec un anneau tendeur (43).

8. Dispositif suivant l'une des revendications 6 et 7, **caractérisé en ce qu'**une bride d'étanchéité (45) est mise en place dans la bride de frein (10), laquelle bride d'étanchéité comporte une bague d'étanchéité et forme par rapport à l'anneau tendeur (43) une étanchéité, pour protéger de l'encrassement et de l'huile les garnitures de friction (9).

9. Dispositif suivant l'une des revendications 1 à 8, **caractérisé en ce qu'**un accouplement de surcharge (49) est monté sur l'accouplement élastique configuré en forme d'un accouplement à soufflet ou d'un accouplement à emboîtement avec étoile élastique, lequel accouplement de surcharge déconnecte la transmission en cas de surcharge par l'intermédiaire d'un initiateur/capteur (50).

10. Dispositif suivant l'une des revendications 1 à 9, **caractérisé en ce qu'**un second frein avec bobine magnétique, disque d'induit et rotor, est inséré dans la combinaison accouplement/frein pour un système de freinage redondant.

11. Dispositif suivant l'une des revendications 1 à 10, **caractérisé en ce qu'**une boîte de jonction (47), dans laquelle se situe un contrôle d'air (48) au moyen d'un microrupteur, est montée sur la combinaison accouplement/frein, lequel contrôle actionne le microrupteur (48) par le déplacement du disque d'induit (7) et émet un signal de libération ou de freinage du frein.
